(19) Europäisches Patentamt
European Patent Office
Office européen des brevets

(11) Publication number: **0 275 347 B1**

# (12) EUROPEAN PATENT SPECIFICATION

(45) Date of publication of patent specification: **21.11.91** (51) Int. Cl.⁵: **C05F 9/02**

(21) Application number: **87107777.2**

(22) Date of filing: **29.05.87**

(54) **Continuous composting process and plant for urban waste.**

(30) Priority: **19.12.86 IT 1260486**

(43) Date of publication of application:
**27.07.88 Bulletin 88/30**

(45) Publication of the grant of the patent:
**21.11.91 Bulletin 91/47**

(84) Designated Contracting States:
**AT BE CH DE ES FR GB GR LI LU NL SE**

(56) References cited:
**EP-A- 0 060 410**
**EP-A- 0 060 997**
**DE-A- 1 917 268**
**DE-A- 2 302 882**
**FR-A- 2 214 670**

(73) Proprietor: **Ferrero, Francesco**
**Via Privata Trento n. 4**
**I-17047 Vado Ligure (SV)(IT)**

(72) Inventor: **Ferrero, Francesco**
**Via Privata Trento n. 4**
**I-17047 Vado Ligure (SV)(IT)**

(74) Representative: **Ferrarotti, Giovanni**
**Studio Consulenza Tecnica Dr. Ing. Giovanni**
**Ferrarotti Via Alla Porta Degli Archi 1/7**
**I-16121 Genova(IT)**

## Description

This invention covers the use of a bridge-crane equipped for storage, turning up and evacuation of mixed organic fractions separated from solid urban waste, to be bioprocessed into fertilizers.

A treatment is known for solid urban waste (trash) to obtain fertilizers from their organic constituents. For example, a system is illustrated in the Italian Patent n° 1.103.170 according to which the solid urban waste or trash is treated in various ways to separate organic from inert matter (glass, stones, plastics, rubber, metal etc.); inert matter is recovered or separately treated together with industrial waste, in an incenerator whereas organic matter is properly shredded, dosed and fed together with additives into bins for guided aerobic transformation.

Furthermore, according to the Italian Patent n° 1.102.953, a system for bioconversion of solid urban waste into fertilizers is also illustrated in detail; in this case solid urban waste is processed together with wastes from the preserved food industry and with sludge from sewage purification systems. In short, according to the latter patent, organic waste fractions, when properly shredded and stockpiled and with sufficient aeration and moisture content ranging between 40% and 60%, will give rise to complex microbiological processes which will turn the original mass into a radically transformed product, generally named "compost", which is used as a fertilizer for crop growing.

During the process, the temperature of the transforming mass rises until it reaches 70° C; its pH value first drops and then rises to 7 or even more.

A kind of catalytic combustion takes place in which $CO_2$ is eliminated; sugars and fat are "burnt" first followed by a systematic demolition of organic macromolecules, cellulose and, at long-term, of lignin.

Putrid fermentation is completely blocked; the eggs of insects, flies, worms and vermin are killed; pathogen germs are destroyed or made harmless. To be triggered off correctly, the process requires some basic conditions, to ensure its smooth development.

First of all, the mass shall be efficiently triturated and homogenized as far as feasible;

- the moisture content shall never be less than 35% and shall not exceed 65%;
- capillarity penetration of the air shall be possible everywhere in the mass during its transformation; aeration is indispensable on account of thermophile bacterial strains, which are responsable for strong temperature rise and for the most important initial transformations of the organic batch;

- $CO_2$ thus developed shall be easily removable;
- preferential channel formation in the mass shall be prevented.

To improve homogenizing of the product and to prevent surface zones of the stockpiles from reaching the pasteurization temperature which is necessary for hygienization of the whole mass, the stockpiles have to be turned up periodically.

In this Patent, particular reference is made to the systems used for feeding, turning up and evacuation of the stock piles on the fermentation yard.

In the Italian patent n° 1.102.953, a separate product feeder is used, consisting of a longitudinal conveyor belt, a transverse conveyor belt and a transverse moving distributor; the latter two are mounted on a bridge crane lengthwise transversing over a short distance of the compost building. The fresh product enters the building encompassing the fermentation yard, by means of a longitudinal conveyor which discharges the fresh product on the transverse conveyor belt feeding the distributor which, by crosswise shuttle movement, uniformly distributes the product in a soft stockpile located in the initial zone of the fermentation yard. Thus, according to the known Patent, the fresh product is introduced only in the initial zone of the transformation yard.

Furthermore, according to the above mentioned Patent n° 1.102.953, turning up and evacuation of the product is accomplished with the aid of a special bridge-crane device moving along the whole length of the building. This bridge-crane devices is consisting of a transversing elevator conveyor fitted at its lower end with a head with several opposed screws dredging the toe of the stockpile and with a milling screw device uniformly reclaiming the material on the stockpile side while adjusting its pileslip. The above bridge-crane device reclaims the product from the stockpile and stacks it in piles again while turning it up or sending it to an extraction conveyor through the same discharge opening provided at the top end.

With this turning up device the initial stockpile of the fresh product stacked by the feeder, having a length L, is turned up and transferred to the next pile, having a length L. In the meanwhile the new product will cover the initial area L while the turning up device transfers stock piles 2 L forward and so on until the end of the building is reached.

The product thus introduced is gradually transferred from the initial zone to the end zone of the building, while allowing for the bioconversion of organic substances into fertilizers.

When the building is full, the end part of the product, which is completely transformed, is removed for a length L by means of the bridge-crane which charges it on the evacuation conveyor.

This system and this known procedure have some drawbacks and in particular the drawback that for every portion L of fresh product and for every corresponding portion of finished product to be evacuated, the whole stockpile has to be transferred over a length L, with enormous loss in time and energy consumption.

Furthermore, since the stockpile of fresh product is formed every day or every other day, while evacuating a corresponding quantity of finished product, the whole stockpile too has to be completely turned up every day or every other day and this is a further drawback. While prompt turning up of the stockpile is required at the beginning, particularly during the central transformation periods the stockpile should be left to settle for better bioconversion of the product.

This invention presents a method, which has the aim to completely eliminate these disadvantages. This method requires only one bridge-crane for all operations: stockpile formation, turning up and evacuation. Hence, feeding of the fresh product can take place in any zone of the fermentation yard, with the advantages hereinafter reported.

With this bridge-crane feeding, turning up and evacuation operations are performed in a completely different way with respect to the known procedure.

Rather than one stockpile, which has to be completely turned up every day or every other day to transfer the product from the beginning to the end of the fermentation yard, several stockpiles are provided, separated by empty zones, which daily move along a segment corresponding to the new stockpile, in which every stock pile covers a length corresponding to a certain number of rest days and this shifting of the stockpiles occurs according to product portions in the opposite direction with respect to the usual practice: stockpiles are moved from the end to the beginning of yard and not from the beginning to the end.

The firststock pile, for example, with three days of material received the material on the fourth day while simultaneously transferring to the next stockpile a corresponding quantity of turned up material which has already undergone three days of bioprocessing;
the second stockpile passes to the next an equal quantity of product and so on up to the last stockpile, from which an equal quantity of finished product is evacuated.

Hence not all the material in the stockpiles is turned up, but only a quantity of material corresponding to the fresh material introduced in the first stock pile ad to the finished product evacuated from the last stock pile is turned up between one stock pile and the next.

A closed progressing cycle is therefore formed, in which the ends, the fresh stock pile and the finished stock pile, face each other.

In this way the material of the various stock piles settles for a prefixed number of days according to the aims of this Patent.

The invention in question is illustrated in its practical implementation and in its utilization in the enclosed drawings in which:

Fig. 1 shows the side view of the bridge-crane during operation between the first and the last stockpile,

Fig. 2 shows the bridge-crane illustrated in Fig. 1 during operation between two intermediate stockpiles,

Fig. 3 schematically shows the operation by the bridge-crane during feeding, turning up and evacuation of a product portion,

Fig. 4 shows positioning of the stockpiles after the operation stage illustrated in Fig. 3.

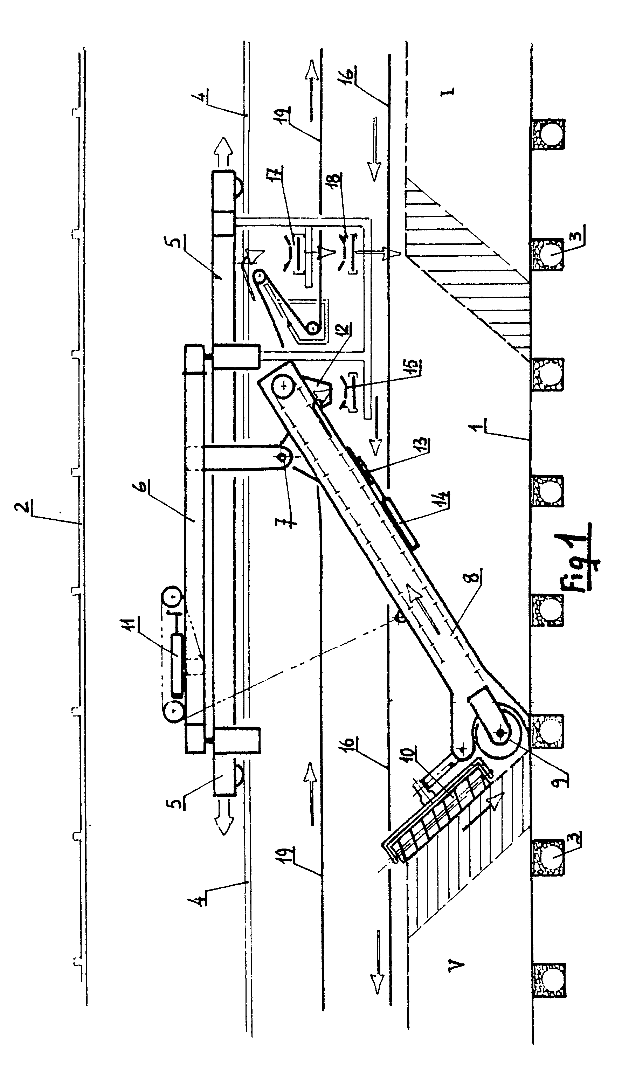

With reference to the above figures, Fig. 1 shows the composting yard provided inside a building 2, fitted with stockpile aeration channels 3. This building is of sufficient width and length as to contain the product during its whole bioprocessing and with product storage capacity, for example, for thirty days.

Rails 4 are provided on both sides of this building 2 for lengthwise travel of a bridge-crane 5 fitted with a transversing trolley.

This second trolley 6 supports, by means of articulated joints 7 with transverse axis, an elevator conveyor 8, for turning up of the product during bioprocessing and evacuation of the finished product.

This elevator conveyor 8 features at its lower end a dredging head 9, formed by two specular symmetrical wormscrews, conveying the product towards the central conveyor belt. A milling device 10, is fitted on this dredging head 9, consisting of a wormscrew or moving prongs, to discipline and stop the product from slipping down the stockpile.

This milling device can be rotated by means of an oil hydraulic piston to cover the width of the dredging head 9.

The elevator conveyor 8 can be lifted to allow for its transfer over the stockpiles by means of a pulley block 11 and the milling device 10 can be tilted on the elevator conveyor by means of an oil hydraulic piston.

The above mentioned equipment is virtually similar to the equipment described in the above Patent n° 1.102.953.

According to this invention this equipment undergoes some changes and more specifically:
- the elevator conveyor 8 when positioned close to the upper discharge 12 features a discharge opening 13 with an apron-gate operated by oil hydraulic piston 14, the head discharge 12 feeding a transverse conveyor belt 15 mounted on bridge-crane 5, in turn feeding a longitudinal conveyor 16 evacuating the finished product located on one side of the building; while the discharge opening 13 directly discharges the stockpiled product on the composting yard for turning up of the product,

- the bridge-crane 5 is fitted with a framework supporting a transverse conveyor 17, which feeds a distributor device 18 forming the stockpile of fresh product: conveyor belt 17 and distributor 18 are fed with fresh product by means of a longitudinal conveyor 19 located on one side of the building.

Hence, according to the aims of this invention, one single bridge-crane device can in any position of the yard feed the fresh product, turn up the transforming product and evacuate the finished product.

With this equipment the product stored on the composting yard can be treated according to the specific modalities also subject matter of this Patent.

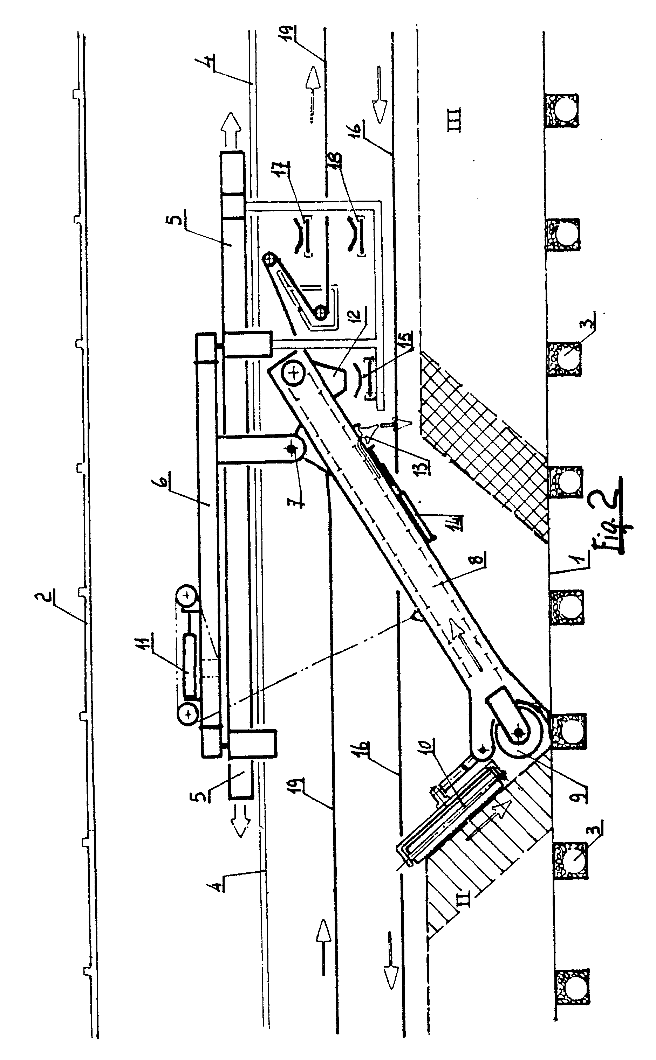

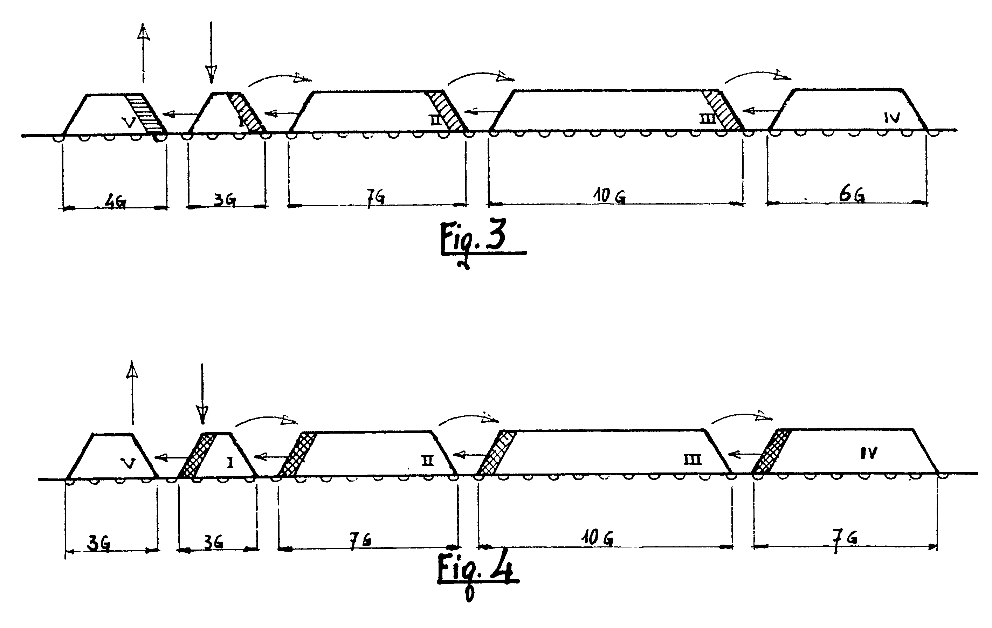

Therefore, with reference to Fig. 3, in contrast with the usual practice of one single stock pile, a configuration of several stock piles of different length is made possible. As an example, on any day "n" at steady state conditions, the following stockpiles will be obtained:

- stockpile I - with length corresponding to 3 days of storage (3D),
- stockpile II - with length corresponding to 7 days of storage (7D),
- stockpile III - with length corresponding to 10 days of storage (10D)
- stockpiles IV + V - with summed lengths corresponding to 10 days of storage and for example to 6 + 4 days respectively (6D and 4D).

Empty spaces are provided between one stockpile and the next, within which the equipped bridge-crane can operate.

Once these stockpiles have been formed they remain unaltered with regard to size and rest time. The above mentioned bridge-crane device is used to operate on these stockpiles for feeding of the fresh product, turning up of the fermenting product and evacuation of the finished product as hereinafter described.

As shown in Fig. 1, the elevator conveyor 8 is positioned between stock piles I and V for evacuation of the finished product and feeding of the fresh product. The elevator conveyor 8 reclaims, by means of the dredging head 9 and the milling device 10, a daily portion of finished product (horizontal hedged area in stock pile V) which is discharged through the end gate 12 to the transverse conveyor belt 15 and from there on to the longitudinal evacuation conveyor belt 16. At the same time a daily portion of fresh product (vertical hedged area of stock pile I) is stored by means of the longitudinal conveyor belt 19, transverse conveyor 17 and distributor 18 on stockpile I.

Upon completion of extraction and storage, the equipped bridge-crane 8, after having lifted the boom, will be transversed for operation between stockpiles I and II. Here, by fast operation and by exploiting all its transport capacity, the bridge-crane in a couple of hours will transfer the material deposited 3 days earlier from stockpile I (oblique hedge area) to stockpile II (cross hedged area). After this transfer-turning up, the bridge-crane is transferred for operation to the area between stockpiles I and II, where it will likewise transfer from stockpile II to stockpile III the material deposited 10 days earlier.

Subsequently the bridge-crane will be moved between stockpiles III and IV and here it will transfer from stockpile III to stockpile IV the material deposited 20 days earlier.

Hence the stockpiles prior to the operations reported are shown in Fig. 3 (day "n") and after these operations they are in the position reported in Fig. 4. (day "n + 1"), in which all stockpiles have moved one step to the left over a length corresponding to the quantity of daily product evacuated and introduced anew.

After this operation stock pile IV shall no longer consist of a 6, but of a 6 + 1 = 7 day deposit.

Therefore on day "n + 1" the stockpile configuration corresponds to the one reported in fig. 4 in which:

- stockpile V will be reduced to a 3 day pile,
- stockpile I will contain the material corresponding to a 3 day deposit,
- stockpile II will contain the material corresponding to a 7 day deposit.
- stockpile III contain the material corresponding to a 10 day deposit,
- stockpile IV will contain the material corresponding to a 6 + 1 = 7 day deposit.

As shown also the empty spaces between the stockpiles have been moved one step from right to left.

Obviously, by continuing this procedure, stockpile V will be eliminated and stockpile IV will contain a 10 day product and its last portion will have a 30 day bioconversion and will be ready to be evacuated. Later, while stockpile IV moves to the left, the fresh product will be stacked at the right end of the yard to form the new stockpile I which will be gradually moved to the left followed by the next stockpiles.

With this type of operation, in compliance with the aims of this invention, the fermentating product will be stopped without being turned up for prefixed periods of time and the required evacuation, turning up and deposit occur according to daily portions of product without having to turn up the whole stock pile, thus saving energy, allowing for faster operations and producing a finished product of higher quality.

When illustrating the stockpile treatment method, reference was made to daily portions of product, but these portions can also be referred to different time intervals as a function of the quantity of product to be treated and the course of stockpile bioconversion.

Naturally the above mentioned equipment is operated by the programmed logic of a computer which is in turn controlled by special sensors so as to perform all the above operations automatically and systematically in order to control, monitor and optimize all chemico-physical factors conditioning the composting process, which, in this way, will be implemented in the fastest and most complete way.

With adequate programming the computer will determine the start/stopping time for the fans blowing or exhausting air from the toe of the stockpile, operation intermittence, reversing of the valves connecting the ventilation channels obtained in the yard paving by controlling blowing and intake of the fan.

The above operations, providing for turning up on the third, tenth and twentieth day as well as for the extraction on the thirtieth day from the introduction of the stockpile, can be modified according to the indications which may derive from the microbiological control of the development of autochthonous strains of micro-organisms responsible for composting, trend of the temperature, humidity and phytotoxicity controls.

## Claims

1. Method for storage, turning up and evacuation of stock piles, utilizing a bridge-crane (5) sliding along longitudinal rails (4) located in a building (2) encompassing an area (1) on which aerobic bioprocessing of waste into fertilizers takes place and consisting of a transversing trolley (6) located on the bridge-crane, supporting in turn, to means of articulated joints (7), an elevator conveyor (8), **characterized** by the fact that:
   - the elevator conveyor (8) when positioned close to the upper discharge (12), features a discharge opening (13) with an apron-gate operated by oil hydraulic piston (14), the head discharge (12) feeding a transverse conveyor (15) mounted on main bridge-crane (5), which in turn feeds a longitudinal conveyor (16) evacuating the finished product, while the intermediate discharge opening (13) directly discharges the stockpiled product on the yard (1) during turning up of stockpiles,
   - the bridge-crane (5) supports the feeding and pile formation equipment of the fresh product including a transverse conveyor (17) and a distributor (18), which are fed by a longitudinal conveyor belt (19) and which enable this feeding equipment to stack piles of fresh product in any position of the fermentation yard,
   so that this equipped bridge-crane can feed the fresh product, turn up the stockpiles and evacuate the finished product

2. the method as described in claim 1, **characterized** by the fact that several stockpiles (from I to V) are formed in a closed progressing cycle, properly spaced to allow for the operation of the equipped bridge-crane, with each stockpile providing for storage of certain daily portions (3D, 7D, etc. ), so that when the bridge-crane is positioned between the first (I) and the last (V) stockpile, a daily portion of finished product can be evacuated, at the same time, this product is reclaimed from the last stockpile while a corresponding daily portion of fresh product is discharged on the first stockpile so that when the bridge-crane is positioned between subsequent stockpiles a daily portion of bioprocessing product is turned up from one stockpile to the next thus causing a closed progressing cycle of stockpiles for lengths of yard corresponding to a daily portion of product while allowing for resting of the central parts of the stockpiles.

## Revendications

1. Procédé pour le stockage, le retournement et l'évacuation de tas de déchets, en utilisant un pont-grue (5) glissant le long de rails longitudinaux (4) installés dans un bâtiment (2) entourant une zone (1) dans laquelle se fait le traitement aérobique de transformation des ordures en engrais et comprenant un chariot transversal (6) monté sur le pont-grue, supportant lui-même, au moyen d'assemblages articulés (7) un convoyeur élévateur (8), caractérisé en ce que :
   - le convoyeur élévateur (8) lorsqu'il placé à proximité de la sortie supérieure (12), se caractérise par une ouverture de décharge (13) qui est une porte mobile actionnée par un vérin hydraulique (14), l'ouverture de décharge supérieure (12) alimentant un convoyeur transversal (15) monté sur le pont-grue principal (5), lequel à son tour alimente un convoyeur longitudinal (16) évacuant le produit fini, tandis que l'ouverture de décharge intermédiaire (13) évacue directement le produit entassé sur la zone (1) de compost pendant le retournement des tas,

- le pont-grue (5) supporte l'équipement d'alimentation et de formation des tas de produit frais qui comporte un convoyeur transversal (17) et un distributeur (18) qui sont alimentés par la bande convoyeuse longitudinale (19) et qui permettent à cet équipement d'alimentation de former des tas de matière fraîche en une position quelconque de la zone de fermentation,

afin que ce pont-grue équipé puisse amener des matières fraîches, retourner les tas et évacuer le produit fini.

2. Procédé selon la revendication 1, caractérisé en ce que plusieurs tas (de I à V) sont formés selon un cycle d'avancement fermé, convenablement espacés pour permettre le fonctionnement du pont-grue équipé, chaque tas permettant le stockage de certaines quantités quotidiennes (3D, 7D, etc.), afin qu'au moment où le pont-grue est placé entre le premier (I) et le dernier (V) tas une quantité quotidienne de produit fini puisse être évacuée, en même temps que la même quantité de produit est prélevée sur le dernier tas et qu'une quantité quotidienne correspondante de matière fraîche est déchargée sur le premier tas de manière qu'au moment où le pont-grue est placé entre les tas suivants une quantité quotidienne de produit de traitement biologique soit retournée d'un tas vers le suivant, en créant ainsi un cycle d'avancement fermé des tas sur des longueurs de zone de transformation correspondant à une quantité quotidienne de produits tout en permettant le repos des parties centrales des tas.

**Patentansprüche**

1. Verfahren für die Lagerung, das Wenden und das Abtransportieren von Haufen, unter Verwendung eines Brückenkranes (5), der entlang von Schienen (4) bewegbar ist, die in einem Gebäude (2) angeordnet sind, das einen Platz (1) umfaßt, an dem die aerobe biologische Umwandlung von Abfall in Dünger stattfindet, wobei am Brückenkran eine querlaufende Laufkatze (6) vorgesehen ist, die ihrerseits mittels gelenkiger Verbindungen (7) einen Elevator (8) trägt, **dadurch gekennzeichnet, daß:**

- der Elevator in Nähe des oberen Auslaufes (12) eine Auslauföffnung (13) aufweist, die mit einem durch einen ölhydraulischen Kolben (14) betätigten Verschluß versehen ist, wobei der obere Auslauf (12) einen Querförderer (15) beschickt, der am Hauptbrückenkran (5) angeordnet ist und der seinerseits einen Längsförderer (16) für das Abtransportieren des fertigen Produktes beschickt, wogegen die Zwischen-Auslauföffnung (13) das gehäufte Produkt während des Wendens der Haufen direkt auf den Platz (1) entlädt,

- der Brückenkran (5) die Ausrüstung für die Beschickung und Bildung des Haufens mit frischem Produkt trägt, die einen Querförderer (17) und einen Verteiler (18) aufweist, die durch ein Längsförderband (19) beschickt werden, wobei es dieser Beschickungsausrüstung möglich ist, Haufen von frischem Produkt an jedem Ort des Kompostierungsplatzes aufzuhäufen,

so, daß der derart ausgestattete Brückenkran das frische Produkt zuführen, die Haufen wenden und das fertige Produkt abführen kann.

2. Verfahren nach Anspruch 1, **dadurch gekennzeichnet**, daß verschiedene Haufen (von I bis V) in einem geschlossenen fortschreitenden Zyklus in einem geeigneten Abstand voneinander gebildet werden, um die Tätigkeit des Brückenkranes zu ermöglichen, wobei jeder Haufen für die Lagerung festgesetzter Tagesmengen (3D, 7D etc.) vorgesehen ist, sodaß bei Positionierung des Brückenkranes zwischen dem ersten (I) und dem letzten (V) Haufen eine Tagesmenge von fertigem Produkt abgeführt werden kann, wobei dieses Produkt vom letzten Haufen gewonnen wird und zur gleichen Zeit eine entsprechende Tagesmenge frischen Produktes auf den ersten Haufen entladen wird, und sodaß bei Positionierung des Brückenkranes zwischen aufeinander folgenden Haufen eine Tagesmenge von biobehandeltem Produkt von einem Haufen zum nächsten gewendet wird, wodurch ein geschlossener fortschreitender Zyklus von Haufen entsprechend einer Platzlänge bewirkt wird, die einer Tagesmenge des Produktes entspricht, und den Mittelteilen der Haufen das Verbleiben ermöglicht.

Fig 1

EP 0 275 347 B1

Fig. 2

EP 0 275 347 B1

Fig. 3

Fig. 4